(19) **Europäisches Patentamt**
**European Patent Office**
**Office européen des brevets**

(11) **EP 2 060 611 B1**

(12) **EUROPEAN PATENT SPECIFICATION**

(45) Date of publication and mention
of the grant of the patent:
**07.11.2018 Bulletin 2018/45**

(51) Int Cl.:
***C09J 7/00*** *(2018.01)*

(21) Application number: **07793086.5**

(22) Date of filing: **03.09.2007**

(86) International application number:
**PCT/JP2007/067143**

(87) International publication number:
**WO 2008/029768 (13.03.2008 Gazette 2008/11)**

(54) **ULTRAVIOLET-CURABLE ADHESIVE COMPOSITION, ULTRAVIOLET-CURABLE ADHESIVE SHEET AND METHOD FOR PRODUCING THE SAME**

ULTRAVIOLETT HÄRTBARE KLEBSTOFFZUSAMMENSETZUNG, ULTRAVIOLETT HÄRTBARE KLEBFOLIE UND HERSTELLUNGSVERFAHREN DAFÜR

COMPOSITION ADHÉSIVE DURCISSABLE PAR RAYONNEMENT ULTRAVIOLET, FEUILLE ADHÉSIVE DURCISSABLE PAR RAYONNEMENT ULTRAVIOLET ET PROCÉDÉ DE FABRICATION DE CELLE-CI

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **04.09.2006 JP 2006239109**
**04.08.2007 JP 2007203706**

(43) Date of publication of application:
**20.05.2009 Bulletin 2009/21**

(73) Proprietor: **NITTO DENKO CORPORATION**
**Ibaraki-shi,**
**Osaka 567-8680 (JP)**

(72) Inventors:
• **HIRAO, Akira c/o NITTO DENKO CORPORATION**
**Ibaraki-shi, Osaka 567-8680 (JP)**
• **NAGASAKI, Kunio c/o NITTO DENKO CORPORATION**
**Ibaraki-shi, Osaka 567-8680 (JP)**
• **SHIMAZAKI, Yuuta c/o NITTO DENKO CORPORATION**
**Ibaraki-shi, Osaka 567-8680 (JP)**

(74) Representative: **Grünecker Patent- und Rechtsanwälte**
**PartG mbB**
**Leopoldstraße 4**
**80802 München (DE)**

(56) References cited:
**EP-A1- 0 303 430      EP-A2- 0 068 696**
**JP-A- 01 066 280      JP-A- 03 035 075**
**JP-A- 05 247 410      JP-A- 58 002 371**
**JP-A- 2000 109 779    JP-A- 2006 022 189**

• **DATABASE WPI Week 200030 Thomson Scientific, London, GB; AN 2000-345093 XP002725370, & JP 2000 109779 A (SOKEN KAGAKU KK) 18 April 2000 (2000-04-18)**
• **DATABASE WPI Week 200613 Thomson Scientific, London, GB; AN 2006-121321 XP002725371, & JP 2006 022189 A (NITTO DENKO CORP) 26 January 2006 (2006-01-26)**

**Description**

TECHNICAL FIELD

The present invention relates to an ultraviolet-curable pressure-sensitive adhesive composition for providing a pressure-sensitive adhesive sheet or tape that is improved in the holding power at high temperatures and has excellent adhesive property, an ultraviolet-curable pressure-sensitive adhesive sheet, and a process for producing an ultraviolet-curable pressure-sensitive adhesive sheet.

BACKGROUND ART

Conventionally, a pressure-sensitive adhesive tape or sheet obtained by providing an acrylic or rubber-based pressure-sensitive adhesive on both surfaces of a substrate such as polyethylene foam, chloroprene foam, urethane foam or acryl foam is being used for joining members together in various fields such as automobile, machine component, electric appliance and building material. The pressure-sensitive adhesive tape or sheet using a foam as the substrate is preferred because it can easily join two surfaces together without using a solvent, and moreover, the substrate has a large stress relaxation ratio, so that adhesion even to an adherend surface having relatively fine irregularities can be attained by virtue of the capability of the substrate to deform and tightly contact with the uneven surface.

However, the pressure-sensitive adhesive tape or sheet described above has a problem that the foam substrate is low in the cohesive failure strength in a high temperature atmosphere and usually, shear strength or peel strength determined by the cohesive failure strength can be hardly obtained at a satisfactory level. For solving this problem, a pressure-sensitive adhesive tape or sheet including an alkyl (meth)acrylate as a main component is disclosed (see, Patent Document 1).

Also, an acrylic pressure-sensitive adhesive sheet where the cohesive force is enhanced by dispersing glass microbubbles in the entire pressure-sensitive adhesive layer and the balance of two factors, namely, peel strength and shear strength at ordinary temperature, is taken into consideration is disclosed (see, Patent Document 2). However, when this acrylic pressure-sensitive adhesive tape is used under high-temperature conditions, there arises a problem that breaking occurs at the interface with an acrylic pressure-sensitive adhesive laminated on an acrylic pressure-sensitive adhesive sheet and sufficiently high shear strength or peel strength cannot be obtained.

To solve such a problem, an acrylic pressure-sensitive adhesive sheet including an alkyl (meth)acrylate as the main component, in which microparticles are dispersed, is disclosed (see, Patent Documents 3, 4 and 5). However, it is failed to obtain sufficiently high shear strength or peel strength at high temperatures.

Furthermore, a foamed pressure-sensitive adhesive tape (see, Patent Documents 6 and 7), a cell-containing pressure-sensitive adhesive (see, Patent Document 8), and a cell-containing viscoelastic composition containing, as a surfactant, a fluorine-containing surfactant having an $C_{2-3}$ oxyalkylene group and a fluorine-based hydrocarbon group within the molecule (see, Patent Document 9) are disclosed. However, sufficiently high shear strength or peel strength at high temperatures is not obtained.

In addition, an ultraviolet-curable pressure-sensitive adhesive composition containing, based on 100 parts by weight of a (meth)acrylic acid ester of an alkyl alcohol having a carbon number of 4 to 14, from 0.0001 to 0.02 mol of a copolymerizable polyfunctional oligoacrylate having a molecular weight of 300 or more, and a photopolymerization initiator is disclosed (see, Patent Document 10). However, sufficiently high shear strength or peel strength at high temperatures is not obtained.

Patent Document 1: JP-A-9-286958
Patent Document 2: JP-B-57-17030
Patent Document 3: JP-A-08-120230
Patent Document 4: JP-A-08-109356
Patent Document 5: JP-A-07-48549
Patent Document 6: JP-A-01-217092
Patent Document 7: JP-A-02-248483
Patent Document 8: JP-A-63-089582
Patent Document 9: JP-A-2006-22189
Patent Document 10: JP-A-7-278500

DISCLOSURE OF THE INVENTION

The present invention has been made by taking into consideration various problems in the above-described conventional acrylic pressure-sensitive adhesive sheets and an object of the present invention is to provide an ultraviolet-curable pressure-sensitive adhesive composition for providing a pressure-sensitive adhesive sheet or tape having a pressure-sensitive adhesive layer excellent in the shear strength and adhesive strength under high-temperature conditions, an ultraviolet-curable pressure-sensitive adhesive sheet, and a process for producing an ultraviolet-curable pressure-sensitive adhesive sheet.

As a result of intensive studies to solve the problems above, the present inventors have found that the above-described object can be attained by forming an ultraviolet-curable pressure-sensitive adhesive composition including a monomer component containing an alkyl (meth)acrylate with the carbon number in the alkyl group being from 1 to 20 and a polar group-containing vinyl monomer, at least one polyfunctional (meth)acrylate having four or more (meth)acryloyl groups within one molecule and having an acryl equivalent of 150 or less, and at least one photopolymerization initiator. The present invention has been accomplished based on this finding.

Namely, the present invention relates to the following (1) to (9).

(1) An ultraviolet-curable pressure-sensitive adhesive composition including:

(a) a monomer component containing 70 to 99 wt% of an alkyl (meth)acrylate with the carbon number in the alkyl group being 1 to 20 and 1 to 30 wt% of a polar group-containing vinyl monomer;
(b) at least one polyfunctional (meth)acrylate having four or more (meth)acryloyl groups within one molecule and having an acryl equivalent of 150 or less, in an amount of 0.01 to 0.1 parts by mol based on 100 parts by mol of the monomer component; and
(c) a photopolymerization initiator.

(2) The ultraviolet-curable pressure-sensitive adhesive composition according to (1), which further includes (d) microparticles in an amount of 0.5 to 20 parts by weight based on 100 parts by weight of the ultraviolet-curable pressure-sensitive adhesive composition.

(3) The ultraviolet-curable pressure-sensitive adhesive composition according to (2), in which the microparticles (d) are hollow microspheres having an average particle diameter of 1 to 500 $\mu$m.

(4) The ultraviolet-curable pressure-sensitive adhesive composition according to any one of (1) to (3), which further includes at least one of (e) cells and (f) a surfactant having a structure of -CH$_2$-CH$_2$-O- or -CH$_2$-CH(CH$_3$)-O- within the molecule thereof.

(5) The ultraviolet-curable pressure-sensitive adhesive composition according to any one of (1) to (4), in which the surfactant (f) is a fluorine-containing surfactant.

(6) An ultraviolet-curable pressure-sensitive adhesive sheet including an ultraviolet-curable pressure-sensitive adhesive composition layer obtained by irradiating the ultraviolet-curable pressure-sensitive adhesive composition according to any one of (1) to (5) with an ultraviolet ray.

(7) An ultraviolet-curable pressure-sensitive adhesive sheet including a substrate and an ultraviolet-curable pressure-sensitive adhesive composition layer provided on at least one surface of the substrate, the ultraviolet-curable pressure-sensitive adhesive composition layer being obtained by irradiating the ultraviolet-curable pressure-sensitive adhesive composition according to any one of (1) to (5) with an ultraviolet ray.

(8) A process for producing an ultraviolet-curable pressure-sensitive adhesive sheet, the process including:

coating an ultraviolet-curable pressure-sensitive adhesive composition on at least one surface of a substrate, in which the ultraviolet-curable pressure-sensitive adhesive composition includes (a) a monomer component containing 70 to 99 wt% of an alkyl (meth)acrylate with the carbon number in the alkyl group being 1 to 20 and 1 to 30 wt% of a polar group-containing vinyl monomer, (b) at least one polyfunctional (meth)acrylate having four or more (meth)acryloyl groups within one molecule and having an acryl equivalent of 150 or less, in an amount of 0.01 to 0.1 parts by mol based on 100 parts by mol of the monomer component, and (c) a photopolymerization initiator;
subsequently irradiating an ultraviolet ray thereon to form a pressure-sensitive adhesive layer.

(9) The process for producing an ultraviolet-curable pressure-sensitive adhesive sheet according to (8), in which the pressure-sensitive adhesive layer is formed by irradiating an ultraviolet ray with the intensity of 1 to 50 mW/cm$^2$ at a wavelength of 300 to 400 nm.

According to the pressure-sensitive adhesive sheet of the present invention, a pressure-sensitive adhesive sheet having a pressure-sensitive adhesive layer excellent in the shear strength and adhesive strength at high-temperature conditions can be formed.

BRIEF DESCRIPTION OF THE DRAWINGS

Figs. 1(a), 1(b) and 1(c) are schematic cross-sectional views partially showing an example of the pressure-sensitive adhesive tape or sheet of the present invention.
Figs. 2(a), 2(b) and 2(c) are schematic cross-sectional views partially showing an example of the pressure-sensitive adhesive tape or sheet of the present invention.
Figs. 3(a), 3(b) and 3(c) are schematic cross-sectional views partially showing an example of the pressure-sensitive adhesive tape or sheet of the present invention.

Description of Reference Numerals and Signs

1 Ultraviolet-curable pressure-sensitive adhesive composition
2 Substrate
3 Ultraviolet-curable pressure-sensitive adhesive composition layer

BEST MODE FOR CARRYING OUT THE INVENTION

The pressure-sensitive adhesive composition of the present invention is an ultraviolet-curable pressure-sensitive adhesive composition including (a) a monomer component containing 70 to 99 wt% of an alkyl (meth)acrylate with the carbon number in the alkyl group being 1 to 20 and 1 to 30 wt% of a polar group-containing vinyl monomer, (b) at least one polyfunctional (meth)acrylate having four or more (meth)acryloyl groups within one molecule and having an acryl equivalent of 150 or less, in an amount of 0.01 to 0.1 parts by mol based on 100 parts by mol of the monomer component, and (c) a photopolymerization initiator.

Examples of the alkyl (meth)acrylate with the carbon number in the alkyl group being 1 to 20, contained in the component (a), includes those using one ester or two or more esters of an acryl or methacryl group containing a linear or branched alkyl group having a carbon number of 1 to 20, particularly 4 to 18, such as methyl group, ethyl group, propyl group, butyl group, amyl group, hexyl group, heptyl group, 2-ethylhexyl group, isooctyl group, isononyl group, isodecyl group, dodecyl group, lauryl group, tridecyl group, tetradecyl group, pentadecyl group, hexadecyl group, heptadecyl group, octadecyl group, nonadecyl group and eicosyl group.
hexadecyl group, heptadecyl group, octadecyl group, nonadecyl group and eicosyl group.

The polar group-containing vinyl monomer contained in the component (a) (hereinafter referred to as a polar group-containing monomer component) is not particularly limited and may be sufficient if it can be copolymerized with the alkyl(meth)acrylate described above.

Examples of the polar group-containing vinyl monomer include a carboxyl group-containing monomer such as (meth)acrylic acid, carboxyethyl(meth)acrylate, carboxypentyl(meth)acrylate, itaconic acid, maleic acid, fumaric acid, and crotonic acid; an acid anhydride monomer such as maleic anhydride and itaconic anhydride; a hydroxy group-containing monomer such as 2-hydroxyethyl(meth)acrylate, 2-hydroxypropyl(meth)acrylate, 4-hydroxybutyl(meth)-acrylate, 6-hydroxyhexyl(meth)acrylate, 8-hydroxyoctyl (meth)acrylate, 10-hydroxydecyl(meth)acrylate, 12-hydroxylauryl(meth)acrylate, and (4-hydroxymethyl-cyclohexyl)methyl(meth)acrylate; a sulfone group-containing monomer such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxy-naphthalenesulfonic acid; a phosphoric acid group-containing monomer such as 2-hydroxyethylacryloyl phosphate; an amide-based monomer such as (meth)acrylamide, methylenesuccinimide, N-(meth)acryloyl-6-oxyhexamethylene-succinimide, and N-(meth)acryloyl-8-oxyoctamethylene-succinimide; a vinyl-based monomer such as vinyl acetate, N-vinylpyrrolidone, N-vinylcarboxylic amide, styrene, and N-vinylcaprolactam; and an acrylic acid ester-based monomer such as acrylonitrile, methacrylonitrile, glycidyl (meth)acrylate, tetrahydrofurfuryl(meth)acrylate, polyethylene glycol(meth)acrylate, polypropylene glycol (meth)acrylate, fluorine(meth)acrylate, silicone (meth)acrylate, and 2-methoxyethyl acrylate.

The monomer as the component (a) in the ultraviolet-curable pressure-sensitive adhesive composition contains 70 to 99 wt% of an alkyl(meth)acrylate and 1 to 30 wt% of a polar group-containing monomer, preferably 80 to 99 wt% of an alkyl(meth)acrylate and 1 to 20 wt% of a polar group-containing monomer, more preferably 90 to 98 wt% of an alkyl(meth)acrylate and 2 to 10 wt% of a polar group-containing monomer. When the amount of the polar group-containing monomer exceeds 30 wt%, the tack of the pressure-sensitive adhesive is lowered. On the other hand, when the amount of the polar group-containing monomer is less than 1 wt%, the cohesive force of the pressure-sensitive adhesive is lowered.

The ultraviolet-curable pressure-sensitive adhesive composition is, in view of handling, preferably adjusted to a viscosity suitable for coating (usually, in the viscosity

The ultraviolet-curable pressure-sensitive adhesive composition is, in view of handling, preferably adjusted to a viscosity suitable for coating (usually, in the viscosity measurement by a B-type viscometer, 0.3 to 40 Pa·s at 25°C). For this purpose, the monomer component described above may be preliminarily polymerized into a partial polymerization product.

The conversion of the partial polymerization product of the monomer component as the component (a) varies depending on the molecular weight of the prepolymer in the partial polymerization product but is preferably on the order of 2 to 40%, more preferably from 5 to 20%. At the partial polymerization, an ultraviolet ray is preferably irradiated while avoiding contact with oxygen.

Incidentally, the conversion of the partial polymerization product is calculated by precisely weighing about 0.5 g of the partial polymerization product, further precisely weighing the weight after drying the partial polymerization product at 130°C for 2 hours, determining the decrease in weight (volatile matter content (weight of unreacted monomer)), and substituting the obtained numerical value for the following formula:

```
Conversion of partial polymerization product (%) =

[1-(decrease in weight)/(weight of partial polymerization

product before drying)]×100
```

10,000,000, preferably 500,000 to 9,000,000, more preferably 1,000,000 to 8,000,000. When the Mw (weight average molecular weight) is less than 100,000, the effect of producing an uncrosslinked component is poor. On the other hand, when it exceeds 10,000,000, the partial polymerization product can be hardly dissolved in the monomer component.

The weight average molecular weight (Mw) can be measured by gel permeation chromatograph (GPC). More specifically, the value in terms of polystyrene can be determined by using "HLC-8120GPC" (trade name, manufactured by Tosoh Corp.) as the GPC measuring apparatus and performing the GPC measurement under the following conditions.

GPC Measurement Conditions:

Sample concentration: 0.1 wt% (tetrahydrofuran solution)
Injection volume of sample: 100 μl
Eluting solution: tetrahydrofuran (THF)
Flow rate (flow velocity): 0.5 mL/min
Column temperature (measurement temperature): 40°C
Column: "TSK GEL GMHHR-H(20)" (trade name, manufactured by Tosoh Corp.), used by connecting two columns
Detector: differential refractometer

Also, in order to obtain a viscosity suitable for coating, the viscosity may be adjusted by appropriately blending a thickening polymer to the ultraviolet-curable pressure-sensitive adhesive composition. Examples of the thickening polymer which can be used include an acrylic polymer obtained by the copolymerization of acrylic acid, acrylamide, acrylonitrile, acryloylmorpholine or the like, a styrene butadiene rubber (SBR), an isoprene rubber, a styrene butadiene block copolymer (SBS), an ethylene-vinyl acetate copolymer, an acryl rubber, a polyurethane, and a polyester. In the case of using a thickening polymer, the thickening polymer is preferably contained in an amount of 5 to 40 wt% based on the ultraviolet-curable pressure-sensitive adhesive composition.

In the present invention, examples of the polyfunctional (meth)acrylate having four or more (meth)acryloyl groups within one molecule and having an acryl equivalent of 150 or less, which is the component (b), include pentaerythritol(meth)acrylate, tetramethylolmethane tetra(meth)acrylate, dipentaerythritolmonohydroxy penta(meth)acrylate, a reaction product thereof with hexamethylene diisocyanate, and dipentaerythritol hexa(meth)acrylate. These polyfunctional (meth)acrylates may be used alone or in combination thereof.

The component (b) is preferably a polyfunctional (meth)acrylate having four or more, more preferably six or more, (meth)acryloyl groups within one molecule. By using a polyfunctional (meth)acrylate having four or more (meth)acryloyl groups within one molecule, a pressure-sensitive adhesive sheet having enhanced holding power at high temperatures and excellent adhesive property can be provided. Although the reason therefor is not clearly know, it is considered that when four or more (meth)acryloyl groups are present, a density distribution of the crosslinking point is created in the pressure-sensitive adhesive composition layer and this enables concurrently bringing out the high cohesive property owing to a high crosslinking density and the stress relieving property owing to a low crosslinking density. If the number of (meth)acryloyl groups is less than 4, density distribution of the crosslinking point is presumed to be not created.

Also, the component (b) is preferably a polyfunctional (meth)acrylate having an acryl equivalent of 150 or less, more preferably 120 or less, still more preferably 100 or less. If the acryl equivalent exceeds 150, the density distribution of the crosslinking point in the pressure-sensitive adhesive layer becomes small and higher shear strength cannot be obtained.

Incidentally, the acryl equivalent is a molecular weight based on one (meth)acryloyl group in the polyfunctional (meth)acrylate as the component (b) and is represented by the following formula:

$$\texttt{Acryl equivalent = molecular weight of component}$$
$$\texttt{(b)/number of (meth)acryloyl groups contained in one}$$
$$\texttt{molecule of component (b)}$$

In the present invention, the amount of the polyfunctional (meth)acrylate slightly differs depending on the number of functional groups or the like but is 0.01 to 0.1 parts by mol, preferably 0.02 to 0.08 parts by mol, more preferably 0.02 to 0.06 parts by mol, based on 100 parts by mol of the monomer component (a).

Incidentally, assuming that the sum of molar ratios of the component (a) is 100 parts by mol, the parts by mol of the component (b) is represented by the following formula:

$$\texttt{Parts by mol of component (b) = molar ratio of}$$
$$\texttt{(b)/molar ratio of (a) (molar ratio of alkyl (meth)acrylate}$$
$$\texttt{+ molar ratio of vinyl monomer)×100}$$

When the amount of the polyfunctional (meth)acrylate as the component (b) is less than 0.01 parts by mol, a sufficiently high cohesive force under high-temperature conditions cannot be obtained. On the other hand, it is more than 0.1 parts by mol, the tack decreases and the cohesive force becomes excessively strong. By using the polyfunctional (meth)acrylate in the range described above, excellent cohesive force can be maintained even in a high-temperature environment and the adhesive strength and holding property are enhanced.

The polyfunctional (meth)acrylate as the component (b) is preferably added in such a way that when the polymerization of the ultraviolet-curable pressure-sensitive adhesive composition is substantially completed, the insoluble content ratio in the obtained polymerization cured product becomes 30 to 90 wt%, preferably 40 to 80 wt%, more preferably 50 to 80 wt%.

When the insoluble content ratio is less than 30 wt%, a sufficiently high cohesive force cannot be obtained. On the other hand, when it exceeds 90 wt%, the tack of the pressure-sensitive adhesive is lowered or the cohesive force becomes excessively strong, which is not preferred.

Incidentally, as for the insoluble content ratio, when the polymerization of the ultraviolet-curable pressure-sensitive adhesive composition is substantially completed, the obtained polymerization cured product is weighed and the value is designated as the initial weight. The polymerization cured product is then poured in ethyl acetate and left standing at room temperature for one week or more, and only the insoluble matter is taken out and after removing the solvent contained therein by drying with hot air under the condition of 130°C for 2 hours or more, weighed. The obtained value is designated as the weight of insoluble matter.

$$\texttt{Insoluble content ratio = weight of insoluble}$$
$$\texttt{matter/initial weight×100 (\%)}$$

Photopolymerization Initiator

The photopolymerization initiator as the component (c) is not particularly limited and, for example, an acetophenone-based photopolymerization initiator, a benzoin ether-based photopolymerization initiator, an $\alpha$-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, and a thioxanthone-based photopolymerization initiator may be used.

Examples of the acetophenone-based photopolymerization initiator include 4-(2-hydroxyethoxy)phenyl(2-hydroxy-2-propyl)ketone (e.g., Darocure 2959, trade name, produced by Ciba Japan K.K.), α-hydroxy-α,α'-dimethylacetophenone (e.g., Darocure 1173, trade name, produced by Ciba Japan K.K.), methoxyacetophenone, 2,2'-dimethoxy-2-phenylacetophenone (e.g., Irgacure 651, trade name, produced by Ciba Japan K.K.), 2-hydroxy-2-cyclohexylacetophenone (e.g., Irgacure 184, trade name, produced by Ciba Japan K.K.), 2,2-diethoxyacetophenone, 2,2-dimethoxy-2-phenylacetophenone, 1-hydroxycyclohexyl phenyl ketone, 4-phenoxydichloroacetophenone, and 4-tert-butyl-dichloroacetophenone.

Specifically, examples of the benzoin ether-based photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether.

Examples of the α-ketol-based photopolymerization initiator include 2-methyl-2-hydroxypropiophenone and 1-[4-(2-hydroxyethyl)-phenyl]-2-hydroxy-2-methylpropan-1-one.

Examples of the aromatic sulfonyl chloride-based photopolymerization initiator include 2-naphthalenesulfonyl chloride. Examples of the photoactive oxime-based photopolymerization initiator include 1-phenyl-1,1-propanedione-2-(o-ethoxycarbonyl)-oxime.

Examples of the benzoin-based photopolymerization initiator include benzoin. Examples of the benzyl-based photopolymerization initiator include benzil. Examples of the benzophenone-based photopolymerization initiator include benzophenone, benzoylbenzoic acid, 3,3'-dimethyl-4-methoxybenzophenone, polyvinylbenzophenone, and α-hydroxycyclohexyl phenyl ketone. Examples of the ketal-based photopolymerization initiator include benzyl dimethyl ketal. Examples of the thioxanthone-based photopolymerization initiator include thioxanthone, 2-chlorothioxanthone, hydroxycyclohexyl phenyl ketone. Examples of the ketal-based photopolymerization initiator include benzyl dimethyl ketal. Examples of the thioxanthone-based photopolymerization initiator include thioxanthone, 2-chlorothioxanthone, 2-methylthioxanthone, 2,4-dimethylthioxanthone, iso-propylthioxanthone, 2,4-dichlorothioxanthone, 2,4-diethyl-thioxanthone, 2,4-diisopropylthioxanthone, and dodecyl-thioxanthone.

Other examples of the photopolymerization initiator include halogenated ketone and acylphosphine oxide (e.g., Irgacure 819, trade name, produced by Ciba Japan K.K.).

As for the amount used of the photopolymerization initiator as the component (c), the photopolymerization initiator is usually blended in a range of 0.06 to 3 parts by mol, preferably 0.08 to 2 parts by mol, more preferably 0.1 to 1 part by mol, based on 100 parts by mol of the monomer component. When the amount thereof is less than 0.06 parts by mol, the polymerization reaction insufficiently proceeds. On the other hand, when it exceeds 1 part by mol, this incurs formation of a polymer having a low molecular weight.

Also, in the ultraviolet-curable pressure-sensitive adhesive composition of the present invention, (d) microparticles, (e) cells and (f) a surfactant may be used in combination with the (a) monomer component containing 70 to 99 wt% of an alkyl (meth)acrylate with the carbon number in the alkyl group being 1 to 20 and 1 to 30 wt% of a polar group-containing vinyl monomer, in addition to the (b) polyfunctional (meth)acrylate containing four or more (meth)acryloyl groups within one molecule and the (c) photopolymerization initiator.

By using (d) microparticles, for example, the shear adhesive strength in the ultraviolet-curable pressure-sensitive adhesive composition may be increased or the processability may be enhanced. The (d) microparticles may be used alone or in combination thereof.

Examples of the (d) microparticles for use in the ultraviolet-curable pressure-sensitive adhesive composition of the present invention include metal particles such as copper, nickel, aluminum, chromium, iron, and stainless steel and metal oxide particles thereof; carbide particles such as silicon carbide, boron carbide, and nitrogen carbide; nitride particles such as aluminum nitride, silicon nitride, and boron nitride; ceramic particles as typified by an oxide such as alumina and zirconia; inorganic microparticles such as calcium carbide, aluminum hydroxide, glass, and silica; natural ingredient particles such as volcanic Shirasu and sand; and polymer particles such as polystyrene, polymethyl methacrylate, phenol resin, benzoguanamine resin, urea resin, silicone resin, nylon, polyester, polyurethane, polyethylene, polypropylene, polyamide, and polyimide.

microparticulate body or a hollow organic microparticulate body. Specifically, examples of the hollow inorganic microparticulate body include a glass-made hollow balloon such as hollow glass balloon; a metal compound-made hollow balloon such as hollow alumina balloon; and a ceramic-made hollow balloon such as hollow ceramic balloon. Examples of the hollow organic microparticulate body include a resin-made hollow balloon such as hollow acryl balloon and hollow vinylidene chloride balloon.

Examples of the hollow glass balloon include "Glass Microballoon" (trade name, produced by Fuji Silysia Chemical Ltd.); "CEL-STAR Z-25", "CEL-STAR Z-27", "CEL-STAR CZ-31T", "CEL-STAR Z-36", "CEL-STAR Z-39", "CEL-STAR T-36", "CEL-STAR SX-39", and "CEL-STAR PZ-6000" (trade names, all produced by Tokai Kogyo Co., Ltd.); and "Sirax·Fine Balloon" (produced by Fine Balloon K.K.).

A solid-core glass balloon may also be used. For example, those commercially available under the trade names "Sunsphere NP-100" (produced by Asahi Glass Co., Ltd.), "Micro Glass Bead EMB-20" (produced by Potters-Ballotini Co., Ltd.), and "Glass Bead EGB-210" (produced by Potters-Ballotini Co., Ltd.), may be used.

Of these (d) microparticles, in view of efficiency, weight or the like of the polymerization using an ultraviolet reaction, a hollow inorganic microparticulate body is preferably used. Furthermore, by using a hollow glass balloon, the adhesive strength at high temperatures can be enhanced without impairing other properties such as shear strength and holding power.

The particle diameter (average particle diameter) of the hollow microparticulate body is not particularly limited but may be selected, for example, from the range of 1 to 500 $\mu$m (preferably 5 to 200 $\mu$m, more preferably 10 to 150 $\mu$m).

The specific gravity of the (d) microparticles is not particularly limited but may be selected, for example, from the range of 0.1 to 1.8 g/cm$^3$, preferably 0.2 to 1.5 g/cm$^3$, more preferably 0.2 to 0.5 g/cm$^3$.

When the specific gravity of the (d) microparticles is less than 0.1 g/cm$^3$, floating thereof increases at mixing of the microparticles into the ultraviolet-curable pressure-sensitive adhesive composition and thus there occurs a case where a homogeneous dispersion is difficult to achieve. Also, since the glass is weak in strength, the microparticle may be easily broken. On the other hand, when the specific gravity thereof exceeds 1.8 g/cm$^3$, the transmittance of the ultraviolet may decrease to reduce the efficiency of the ultraviolet reaction. Moreover, the acryl foam-like tape becomes heavy and workability becomes worse.

The amount of the (d) microparticles is not particularly limited and, for example, may be selected from the range of 5 to 50 vol%, preferably, 15 to 40 vol%, based on the total volume of the ultraviolet-curable pressure-sensitive adhesive composition layer formed from the ultraviolet-curable pressure-sensitive adhesive composition.

When the amount of the (d) microparticles is less than 10 vol% based on the total volume of the ultraviolet-curable pressure-sensitive adhesive composition layer formed from the ultraviolet-curable pressure-sensitive adhesive composition, the effect of adding the (d) microparticles is low. On the other hand, the amount thereof exceeds 50 vol%, the adhesive strength decreases.

Also, the amount of the (d) microparticles based on the ultraviolet-curable pressure-sensitive adhesive composition is preferably 0.5 to 20 parts by weight based on 100 parts by weight of the ultraviolet-curable pressure-sensitive adhesive composition.

The ultraviolet-curable pressure-sensitive adhesive composition of the present invention may also contain (e) cells. The amount of the cells which can be mixed in the cell-containing ultraviolet-curable pressure-sensitive adhesive composition is not particularly limited and may be suitably selected depending on the intended purpose and the like.

For example, the amount of the cells is 5 to 40 vol%, preferably 8 to 30 vol%, based on the total volume of the ultraviolet-curable pressure-sensitive adhesive composition. When the mixing amount is less than 5 vol%, the effect of mixing cells is not obtained. On the other hand, when the amount thereof exceeds 40 vol%, cells perforated through the ultraviolet-curable pressure-sensitive adhesive composition may be formed and adhesion performance and appearance become worse.

The cells mixed in the cell-containing ultraviolet-curable pressure-sensitive adhesive composition may be either closed cells or interconnected cells. However, there may be closed cells together with interconnected cells.

Moreover, although these cells usually have a spherical shape (especially, completely spherical shape), they may be in an irregular spherical shape. Additionally, the particle diameter (average particle diameter) thereof is not particularly limited but may be selected, for example, the range of 1 to 1,000 $\mu$m, preferably 5 to 500 $\mu$m, more preferably 10 to 300 $\mu$m.

A gas component contained in the cells (a gas component which forms cells; sometimes referred to as a "cell-forming gas") is not particularly limited. In addition to an inert gas such as nitrogen, carbon dioxide and argon, other various gas components such as air may be used as the cell-forming gas.

As the cell-forming gas, in the case of performing a reaction such as polymerization reaction after mixing the cell-forming gas, it is important to use a cell-forming gas which would never inhibit the polymerization reaction. As the cell-forming gas, nitrogen is suitable in view of no inhibition of the reaction and the costs and so on.

In order to stably mix fine cells, (f) a surfactant may be added to the ultraviolet-curable pressure-sensitive adhesive composition. For this surfactant, a surfactant having a structure of -CH$_2$-CH$_2$-O- or -CH$_2$-CH(CH$_3$)-O- within the molecule thereof is used. By having such a structure within the molecule thereof, the adherence between the hollow microparticulate body and the ultraviolet curable pressure-sensitive adhesive composition is improved and the stress dispersibility and adhesion strength are brought out.

The (f) surfactant is not particularly limited as long as it is a surfactant having the above-mentioned structure within the molecule, but in view of dispersibility for the base polymer, a nonionic surfactant is suitably used, and the nonionic surfactant which can be used includes a hydrocarbon-based surfactant, a silicone-based surfactant, and a fluorine-containing surfactant.

Examples of the hydrocarbon-based surfactant as the nonionic surfactant include a polyoxyethylene alkyl ether, a polyoxyethylene alkylphenyl ether, a polyoxyethylene sorbitan alkylate, a polyethylene glycol alkylate, and polyoxyethylene alkylamine.

Also, in view of great effect of improving adherence between the microparticulate body and the ultraviolet-curable pressure-sensitive adhesive composition and mixing property in mixing the cells, a fluorine-containing surfactant as the nonionic surfactant may be more suitably used.

In particular, a fluorine-containing surfactant containing a fluorine-based polymer having a weight average molecular weight of 20,000 or more may be used.

In the case where a fluorine-based polymer having a weight average molecular weight of 20,000 or more is used as the fluorine-based surfactant, a sufficiently large amount of cells are stably mixed in the cell-containing ultraviolet-curable pressure-sensitive adhesive composition.

This is presumed to be attributable to the fact that because the fluorine-based polymer constituting the fluorine-containing surfactant has a large weight average molecular weight of 20,000 or more, the film strength of the produced cells becomes strong and therefore, the amount of the cells which can be mixed is increased and the stability of the cells is elevated to hardly allow the progress of integration of cells.

As the fluorine-containing surfactant, a fluorine-containing surfactant containing a fluorine-based polymer having a weight average molecular weight of 20,000 or more is preferably used, and the weight average molecular weight thereof may be selected from the range of 20,000 to 100,000, preferably 22,000 to 80,000, more preferably 24,000 to 60,000.

When the weight average molecular weight of the fluorine-based polymer in the fluorine-containing surfactant is less than 20,000, mixing property of the cells or stability of the mixed cells is decrease. In addition, even when mixed, the integration of the cells is apt to proceed during the period from the mixing of the cells until the formation of the cell-containing ultraviolet-curable pressure-sensitive adhesive composition. As a result, the amount of the cells in the cell-containing ultraviolet-curable pressure-sensitive adhesive composition decreases and cells (pores) which perforate the cell-containing ultraviolet-curable pressure-sensitive adhesive composition may be formed.

In this connection, the fluorine-based polymer may be used alone or in combination thereof.

Such a fluorine-based polymer contains at least a monomer containing a fluorine atom-containing group (hereinafter, sometimes referred to as "fluorine-based monomer"). The fluorine-based monomer may be used alone or in combination thereof.

As the above-mentioned fluorine-based monomer, for example, a vinylic monomer having a fluorine atom-containing group can be preferably used. In the vinylic monomer having a fluorine atom-containing group, as the fluorine atom-containing group, a perfluoro group is preferred and the perfluoro group may be monovalent, or may be divalent or multivalent.

As the monovalent fluorine atom-containing group (especially perfluoro group), for example, a perfuloroalkyl group (e.g., $CF_3CF_2$ group, $CF_3CF_2CF_2$ group, etc.) can be suitably used.

The perfluoroalkyl group may be bonded to a vinylic monomer through the other group (e.g., -O- group, -OCO- group, alkylene group, etc.). Specifically, the monovalent fluorine atom-containing group may be a form of a perfluoroether group (perfluoroalkyl-oxy group, etc.), a perfluoroester group (perfluoroalkyl-oxycarbonyl group, perfluoroalkyl-carbonyloxy group, etc.), or the like.

Examples of the above-mentioned perfluoroalkyl ether group include $CF_3CF_2O$ group, and $CF_3CF_2CF_2O$ group. Moreover, examples of the above-mentioned perfluoroester group include $CF_3CF_2OCO$ group, $CF_3CF_2CF_2OCO$ group, $CF_3CF_2COO$ group, and $CF_3CF_2CF_2COO$ group.

Moreover, in the divalent or multivalent fluorine atom-containing group, examples of the divalent fluorine atom-containing group include perfluoroalkylene groups corresponding to the above-mentioned perfluoroalkyl groups (e.g., tetrafluoroethylene group, hexafluoropropylene group, etc.).

The perfluoroalkylene group may be bonded to the main chain through the other group (e.g., -O- group, -OCO- group, alkylene group, etc.) as in the case of the above-mentioned perfluoroalkyl group and, for example, may be a form of a perfluoroalkylene-oxy group such as a tetrafluoroethylene-oxy group or a hexafluoropropylene-oxy group; a perfluoroalkylene-oxycarbonyl group such as a tetrafluoroethylene-oxycarbonyl group or a hexafluoropropylene-oxycarbonyl group.

In the fluorine atom-containing groups such as perfluoro groups (perfluoroalkyl groups, perfluoroalkylene groups, etc.), the number of carbon atoms at the perfluoro group site is not particularly limited and, for example, is 1 or 2 or more (preferably 3 to 30, more preferably 4 to 20) .

As the vinylic monomer having a fluorine atom-containing group, a (meth)acrylic acid ester having a fluorine atom-containing group is suitable. As the (meth)acrylic acid ester having a fluorine atom-containing group, for example, a perfluoroalkyl(meth)acrylate is suitable.

Examples of the perfluoroalkyl(meth)acrylate include $C_{1-20}$ perfluoroalkyl(meth)acrylates such as perfluoromethyl (meth)acrylate, perfluoroethyl(meth)acrylate, perfluoropropyl (meth)acrylate, perfluoroisopropyl (meth)acrylate, perfluorobutyl(meth)acrylate, perfluoroisobutyl(meth)acrylate, perfluoro-s-butyl (meth)acrylate, perfluoro-t-butyl(meth)acrylate, perfluoropentyl(meth)acrylate, perfluorohexyl (meth)acrylate, perfluoroheptyl(meth)acrylate, and perfluorooctyl(meth)acrylate.

As the fluorine-based polymer, as a monomer component, a monomer component copolymerizable with the fluorine-based monomer (sometimes referred to as "non-fluorine-based monomer") may be used together with the fluorine-based monomer. The non-fluorine-based monomer may be used alone or in combination thereof.

For example, in the case where the fluorine-based monomer is a vinylic monomer having a fluorine atom-containing group (especially, a (meth)acrylic acid ester having a fluorine atom-containing group), a (meth)acrylic acid ester can be suitably used as the non-fluorine-based monomer and an alkyl (meth)acrylate is particularly preferred.

Examples of the alkyl(meth)acrylate include $C_{1-20}$ alkyl(meth) acrylates (preferably $C_{4-18}$ alkyl (meth)acrylates) such as methyl(meth)acrylate, ethyl (meth)acrylate, propyl(meth)acrylate, isopropyl (meth)acrylate, butyl(meth)acrylate, isobutyl (meth)acrylate, s-butyl(meth)acrylate, t-butyl (meth)acrylate, pentyl(meth)acrylate, hexyl (meth)acrylate, heptyl(meth)acrylate, octyl (meth)acrylate, 2-ethylhexyl(meth)acrylate, isooctyl (meth)acrylate, nonyl(meth)acrylate, isononyl (meth)acrylate, decyl(meth)acrylate, isodecyl (meth)acrylate, undecyl(meth)acrylate, dodecyl (meth)acrylate, tridecyl(meth)acrylate, tetradecyl (meth)acrylate, pentadecyl(meth)acrylate, hexadecyl (meth)acrylate, heptadecyl(meth)acrylate, octadecyl (meth)acrylate, nonadecyl(meth)acrylate, and eicosyl (meth)acrylate.

Examples of the (meth)acrylic acid esters other than the alkyl(meth)acrylate include (meth)acrylic acid esters having an alicyclic hydrocarbon group such as cyclopentyl (meth)acrylate, cyclohexyl(meth)acrylate, and isobornyl (meth)acrylate, and (meth)acrylic acid esters having an aromatic hydrocarbon group such as phenyl(meth)acrylate.

Moreover, examples of the non-fluorine-based monomers include carboxyl group-containing monomers such as (meth)acrylic acid, itaconic acid, maleic acid, fumaric acid, crotonic acid, and isocrotonic acid or anhydrides thereof; sulfonic acid group-containing monomers such as sodium vinylsulfonate; aromatic vinyl compounds such as styrene and vinyltoluene; cyano group-containing monomers such as acrylonitrile and methacrylonitrile; olefins or dienes such as ethylene, butadiene, isoprene, and isobutylene; vinyl esters such as vinyl acetate; vinyl ethers such as vinyl alkyl ether; vinyl chloride; amide group-containing monomers such as acrylamide, methacrylamide, N-vinylpyrrolidone, N,N-dimethyl(meth)acrylamide, N-methylol(meth)acrylamide, N-methoxymethyl(meth)acrylamide, and N-butoxymethyl(meth)acrylamide; hydroxyl group-containing monomers such as hydroxyethyl (meth)acrylates, hydroxypropyl (meth)acrylates, and hydroxybutyl (meth)acrylates; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; and isocyanate group-containing vinylic monomers such as 2-methacryloyloxyethyl isocyanate.

Furthermore, as the non-fluorine-based monomer, for example, a polyfunctional copolymerizable monomer (polyfunctional monomer) such as triethylene glycol di(meth)acrylate, diethylene glycol di(meth)acrylate, ethylene glycol di(meth)acrylate, tetraethylene glycol di(meth)acrylate, neopentyl glycol di(meth)acrylate, 1,6-hexanediol di(meth)acrylate, trimethylolpropane tri(meth)acrylate, pentaerythritol tri(meth)acrylate, dipentaerythritol hexa(meth)acrylate, or divinylbenzene may be used.

In the invention, as the fluorine-based surfactant, a fluorine-based surfactant containing a fluorine-based polymer containing a vinylic monomer having a fluorine atom-containing group (especially, (meth)acrylic acid ester having a fluorine atom-containing group) as at least a monomer component is suitable, and particularly, a fluorine-based surfactant containing a fluorine-based polymer containing a vinylic monomer having a fluorine atom-containing group (especially, (meth)acrylic acid ester having a fluorine atom-containing group) and a (meth)acrylic acid ester (especially, alkyl (meth)acrylate) as at least monomer components can be suitably used.

Specific examples of the fluorine-containing surfactant include "Ftergent 251" (trade name, produced by NEOS Co., Ltd.), "FTX-218" (trade name, produced by NEOS Co., Ltd.), "FTop EF-352" (trade name, produced by JEMCO Inc.), "FTop EF-801" (trade name, produced by JEMCO Inc.), "Megaface F-477" (trade name, produced by Dainippon Ink and Chemicals, Inc.), "Megaface F-470" (trade name, produced by Dainippon Ink and Chemicals, Inc.), "Surflon S-381" (trade name, produced by Seimi Chemical Co., Ltd.), "Surflon S-383" (trade name, produced by Seimi Chemical Co., Ltd.), "Surflon S-393" (trade name, produced by Seimi Chemical Co., Ltd.), "KH-20" (trade name, produced by Seimi Chemical Co., Ltd.), "KH-40" (trade name, produced by Seimi Chemical Co., Ltd.), and "UNIDYNE TG-656" (trade name, produced by Daikin Industries, Ltd.).

The amount (solid content) of the fluorine-containing surfactant to be used is not particularly limited but, for example, may be selected from the range of 0.01 to 2 parts by weight, preferably 0.03 to 1.5 parts by weight, more preferably 0.05 to 1 part by weight, based on 100 parts by weight of the (a) monomer component in the cell-containing ultraviolet-curable pressure-sensitive adhesive composition.

When the amount of the fluorine-containing surfactant is less than 0.01 parts by weight based on 100 parts by weight of the (a) monomer component in the cell-containing ultraviolet-curable pressure-sensitive adhesive composition, the mixing property of the cells is lowered and a sufficiently large amount of cells can be hardly mixed in the cell-containing ultraviolet-curable pressure-sensitive adhesive composition. On the other hand, when it exceeds 2 parts by weight, the adhesion performance is lowered.

In the invention, in order to stably mix cells in the ultraviolet-curable pressure-sensitive adhesive composition to achieve stable presence thereof, the cells are preferably mixed as a final component to be mixed in the ultraviolet-curable pressure-sensitive adhesive composition.

The viscosity of the cell-containing ultraviolet-curable pressure-sensitive adhesive composition is not particularly limited so far as it is viscosity at which the mixed cells can be stably retained. For example, the viscosity measured under conditions of a rotor of No. 5 rotor, a rotation number of 10 rpm, and a measuring temperature of 30°C using a BH viscometer as a viscometer is desirably 5 to 50 Pa·s (preferably 10 to 40 Pa·s).

When the viscosity of the cell-containing ultraviolet-curable pressure-sensitive adhesive composition (BH viscometer, No. 5 rotor, 10 rpm, 30°C) is less than 5 Pa·s, the viscosity is excessively low and the mixed cells may be immediately integrated and may escape to outside of the system in some cases. On the other hand, when it exceeds 50 Pa·s, the formation of the cell-containing ultraviolet-curable pressure-sensitive adhesive composition becomes difficult owing to excessively high viscosity.

Incidentally, the viscosity of the cell-containing ultraviolet-curable pressure-sensitive adhesive composition can be adjusted, for example, as described above, by a method of blending various polymer components such as acryl rubber and thickening additive, or a method of partially polymerizing the monomer component to form a partial polymerization product.

Then, cells are introduced and mixed into this cell-containing ultraviolet-curable pressure-sensitive adhesive composition, whereby a cell-containing ultraviolet curable pressure-sensitive adhesive composition stably containing cells can be obtained.

The method of mixing cells is not particularly limited and conventional cell mixing method can be utilized. For example, examples of an apparatus include an apparatus including a stator having a large number of fine teeth on a disc having a through-hole at the central part and a rotor, which is opposite to the stator having teeth, having fine teeth on a disc like the stator, and the like apparatus.

The cell-containing ultraviolet-curable pressure-sensitive adhesive composition is introduced between the teeth on the stator and the teeth on the rotor in the apparatus and a gas component for forming cells (cell-forming gas) is introduced into the cell-containing ultraviolet-curable pressure-sensitive adhesive composition through the through-hole under high-speed rotation of the rotor, whereby a cell-containing ultraviolet-curable pressure-sensitive adhesive composition allowing the cell-forming gas to be finely dispersed and mixed in the cell-containing ultraviolet-curable pressure-sensitive adhesive composition can be obtained.

Incidentally, for suppressing or preventing integration of cells, the steps from mixing of the cells to the formation of a cell-containing ultraviolet-curable pressure-sensitive adhesive layer are preferably performed continuously as a series of steps. Namely, after mixing the cells to prepare a cell-containing ultraviolet-curable pressure-sensitive adhesive composition, a cell-containing ultraviolet-curable pressure-sensitive adhesive layer is preferably formed using the cell-containing ultraviolet-curable pressure-sensitive adhesive composition by utilizing a conventional formation method of a pressure-sensitive adhesive layer.

Since such a cell-containing ultraviolet-curable pressure-sensitive adhesive composition hardly causes the integration of cells and stably contains a sufficient amount of cells, the cells can be suitably used as cells for forming a cell-containing ultraviolet-curable pressure-sensitive adhesive composition by appropriately selecting the polymer, additive and the like constituting the cell-containing ultraviolet-curable pressure-sensitive adhesive composition.

Also, in the ultraviolet-curable pressure-sensitive adhesive composition, as an arbitrary component other than those described above, a tackifier including a crosslinking compound having a functional group (e.g., isocyanate group, epoxy group, aziridinyl group, oxazoline group, carbodiimide group) capable of reacting with a polar functional group of the polar group-containing monomer, a rosin derivative resin, a polyterpene resin, a petroleum resin, an oil-soluble phenol resin or the like, which is solid, semisolid or liquid at ordinary temperature, and other conventional various additives such as plasticizer, softening agent, filler, antioxidant, colorant (e.g., pigment, dye), may be appropriately blended within the range not inhibiting the photopolymerizability.

In the case where the ultraviolet-curable pressure-sensitive adhesive composition is intended to be colored black, for example, carbon black may be used. In view of coloring degree or not inhibiting the photopolymerization reaction, the amount of the carbon black used is, for example, preferably selected from the range of 0.001 to 0.10 parts by weight, more preferably 0.01 to 0.15 parts by weight, based on 100 parts by weight of all monomer components for forming the base polymer in the ultraviolet-curable pressure-sensitive adhesive composition.

Ultraviolet-Curable Pressure-Sensitive Adhesive Tape or Sheet

The ultraviolet-curable adhesive tape or sheet of the present invention has an ultraviolet-curable pressure-sensitive adhesive composition layer formed from the above-described ultraviolet-curable pressure-sensitive adhesive composition. Such an ultraviolet-curable pressure-sensitive adhesive tape or sheet may be in the form of an ultraviolet-curable pressure-sensitive adhesive tape or sheet with the adhesive surface being one surface by laminating the ultraviolet-curable pressure-sensitive adhesive composition layer on one surface of a substrate, or in the form of an ultraviolet-curable adhesive tape with both surfaces being the adhesive surface (pressure-sensitive adhesive surface).

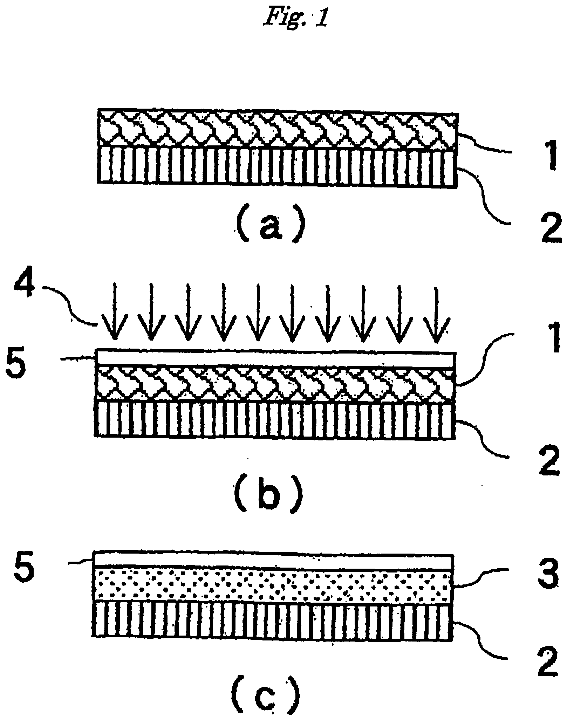

An example of the production method of the ultraviolet-curable pressure-sensitive adhesive tape or sheet is described below by referring to Figs. 1, 2 and 3. The production method thereof in the present invention is not limited by Figs. 1, 2 and 3.

Fig. 1 relates to the ultraviolet-curable pressure-sensitive adhesive tape of the present invention, having a construction such that only one surface with respect to the substrate 2 is the adhesive surface. In the Figure, 2 indicates a substrate, and 1 indicates an ultraviolet-curable pressure-sensitive adhesive composition. Fig. 1(a) shows a state of the ultraviolet-curable pressure-sensitive adhesive composition 1 being directly coated on the substrate 2.

Substrate

As the substrate 2, there may be used an appropriate thin leafy body, for example, a paper-based substrate such as paper; a fiber-based substrate such as fabric, nonwoven fabric and net; a metal-based substrate such as metal foil and metal sheet; a plastic-based substrate such as plastic film or sheet; a rubber-based substrate such as rubber sheet; a foam such as foamed sheet; or a laminate thereof (in particular, a laminate of a plastic-based substrate with another substrate, or a laminate of plastic films with each other). The substrate may be suitably a plastic-based substrate such as plastic film or sheet.

Examples of the material for the plastic film or sheet include an olefin-based resin using an $\alpha$-olefin as the monomer component, such as polyethylene (PE), polypropylene (PP), ethylene-propylene copolymer, and ethylene-vinyl acetate copolymer (EVA); a polyester-based resin such as polyethylene terephthalate (PET), polyethylene naphthalate (PEN), and polybutylene terephthalate (PBT); a polyvinyl chloride (PVC); a vinyl acetate-based resin; a polyphenylene sulfide (PPS); an amide-based resin such as polyamide (nylon) and whole aromatic polyamide (aramid); a polyimide-based resin; and a polyether ether ketone (PEEK). These materials may be used alone or in combination thereof.

In the case of using a plastic-based substrate as the substrate, the deforming properties such as elongation rate may be regulated by a stretching treatment or the like. Moreover, in the case where the pressure-sensitive adhesive layer is formed by curing with an active energy ray, it is preferred to use one which does not inhibit transmission of the active energy ray.

The thickness of the substrate may be suitably selected depending on the strength, flexibility, intended use and the like and is, for example, generally 1 to 1,000 $\mu$m, preferably 1 to 500 $\mu$m, more preferably 3 to 300 $\mu$m, but is not limited thereto. Incidentally, the substrate may take a single-layer form or a multilayer form.

In order to enhance the adhesiveness with the pressure-sensitive adhesive layer or the like, the surface of the substrate may be subjected to a commonly employed surface treatment, for example, an oxidation treatment by a chemical or physical method, such as corona treatment, chromic acid treatment, exposure to ozone, exposure to flame, exposure to high-voltage electric shock, or ionizing radiation treatment, or may be subjected, for example, to a coating treatment with an undercoating agent, a releasing agent or the like.

Coating Method

The method for coating the ultraviolet-curable pressure-sensitive adhesive composition 1 on the substrate 2 is not particularly limited, and an ordinary method may be employed. Examples thereof include a slot die method, a reverse gravure coating method, a microgravure method, a dip method, a spin coating method, a brush coating method, a roll coating method, and a flexo printing method.

As the coater used at the coating, an arbitrary coater such as generally employed roll coater (e.g., reverse coater, gravure coater), curtain coater, lip coater, die coater and knife coater may be used.

Pressure-Sensitive Adhesive Layer

The thickness of the pressure-sensitive adhesive layer is not particularly limited and may be selected, for example, from the range of 200 to 5,000 $\mu$m, preferably 300 to 4,000 $\mu$m, more preferably 400 to 3,000 $\mu$m. When the thickness of the ultraviolet-curable pressure-sensitive adhesive composition is less than 200 $\mu$m, the cushioning property is lowered and the adhesion to a curved or uneven surface decreases. On the other hand, when it exceeds 5,000 $\mu$m, a layer or sheet having a uniform thickness becomes difficult to be obtained.

In coating the ultraviolet-curable pressure-sensitive adhesive composition on a substrate or the like, the composition may be thickened for smoothly performing the operation. The thickening can be adjusted, for example, by a method of blending various polymer components such as acryl rubber and thickening additive, or a method of partially polymerizing the monomer component for forming the base polymer.

Fig. 1(b) shows a step of irradiating an ultraviolet ray, namely, a step where, in the state of oxygen being blocked, an ultraviolet ray 4 is irradiated on the ultraviolet-curable pressure-sensitive adhesive composition 1 through a release film 5 to obtain an ultraviolet-curable pressure-sensitive adhesive composition layer 3.

Release Film

In the present invention, for forming and protecting the pressure-sensitive adhesive layer, a release film that transmits an ultraviolet ray but blocks oxygen, such as polyethylene terephthalate coated with a release agent (e.g., silicone), is preferably used. In order to prevent as much as possible oxygen having polymerization inhibiting activity from affecting the conversion, molecular weight and molecular weight distribution of the obtained polymer, the pressure-sensitive adhesive layer is preferably laminated in the state of oxygen being blocked by the release film. Incidentally, the release film may protect the ultraviolet-curable pressure-sensitive adhesive composition layer until it is separated when using the adhesive surface protected by the release film.

As another method using no release film, the ultraviolet irradiation step of Fig. 1(b) may be a step of irradiating light on the ultraviolet-curable pressure-sensitive adhesive composition in an inert gas atmosphere such as nitrogen gas, in place of using a release film.

The inert gas atmosphere preferably allows the presence of as little oxygen as possible, and the oxygen concentration is preferably 5,000 ppm or less. When the amount of dissolved oxygen is large, the generation of a radical may be suppressed and the polymerization may not sufficiently proceed, giving rise to adverse effect on the conversion, molecular weight and molecular weight distribution of the obtained polymer.

As the release film, a commonly employed release paper or the like may be used. Specific examples of the release film which can be used include a substrate having on at least one surface thereof a release treated layer by a release treating agent; a low-adhesive substrate formed of a fluorine-based polymer (e.g., polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer); and a low-adhesive substrate formed of a nonpolar polymer (for example, an olefin-based resin such as polyethylene and polypropylene). Incidentally, the release film may also be used as a substrate for supporting the pressure-sensitive adhesive layer.

As the release film, for example, a release film obtained by forming a release treated layer on at least one surface of a release liner substrate may be suitably used. Examples of the release liner substrate include a plastic-based substrate film (synthetic resin film) such as polyester film (e.g., polyethylene terephthalate film), olefin-based resin film (e.g., polyethylene film, polypropylene film), polyvinyl chloride film, polyimide film, and polyamide film (e.g., nylon film); papers (e.g., woodfree paper, Japanese paper, kraft paper, glassine paper, synthetic paper, top-coated paper); and as well as those obtained by multilayer formation thereof through lamination , co-extrusion or the like (complexes of two or three layers).

The release treating agent constituting the release treated layer is not particularly limited and, for example, a silicone-based release treating agent, a fluorine-based release treating agent, or a long-chain alkyl-based release treating agent may be used. These release treating agents may be used alone or in combination thereof.

As the release film substrate, in the case of not performing the light irradiation in air or in an inert gas atmosphere, a release film substrate using a plastic-based substrate film (in particular, a polyethylene terephthalate film) capable of blocking oxygen may be suitably used.

Ultraviolet Irradiation

In the present invention, as the ultraviolet lamp used for the ultraviolet irradiation, a lamp having a spectral distribution in the wavelength region of 300 to 400 nm is used, and examples thereof include a chemical lamp, Black Light (produced by Toshiba Lighting & Technology Corp.), and a metal halide lamp.

Specifically, an ultraviolet ray having an intensity of 1 to 50 mW/cm$^2$, preferably 3 to 30 mW/cm$^2$, at a wavelength of 300 to 400 nm is preferably irradiated. When the illumination intensity of the ultraviolet ray exceeds 50 mW/cm$^2$, the molecular weight of the produced polymer decreases due to the effect of polymerization heat and sufficient pressure-sensitive adhesive property cannot be obtained. On the other hand, when it is less than 1 mW/cm$^2$, the ultraviolet irradiation necessary for obtaining the objective pressure-sensitive adhesive takes a very long time. The illumination intensity of the ultraviolet ray can be measured by UVR-T1 (produced by Topcon Corp.) having a maximum peak sensitivity at a wavelength of 350 nm.

In the present invention, the light illumination intensity of the ultraviolet ray is set to the objective illumination intensity by adjusting the distance from the ultraviolet lamp to the ultraviolet-curable pressure-sensitive adhesive composition or the voltage. However, when the ultraviolet irradiation performed in each step is divided into a plurality of stages by the method disclosed in JP-A-2003-13015, the pressure-sensitive adhesive performance can be more precisely adjusted.

Namely, the light irradiation in the present invention is performed by a method including a first step of performing light irradiation at a light illumination intensity of 30 mW/cm$^2$ or more and a second step of performing light irradiation at a light illumination intensity lower than in the first step to substantially complete the polymerization reaction, or a method including a first step of performing light irradiation at a light illumination intensity of 30 mW/cm$^2$ or more, a second step of performing light irradiation at a light illumination intensity lower than in the first step to achieve a conversion of at least 70%, and a third step of performing light irradiation at a light illumination intensity of 30 mW/cm$^2$ or more to substantially complete the polymerization reaction.

Of these steps, for the light irradiation in the first and third steps, an optical lamp such as low-pressure mercury lamp, high-pressure mercury lamp, ultrahigh-pressure mercury lamp, and metal halide lamp is used, and for the light irradiation in the second step, an optical lamp such as chemical lamp and black light is used. The light illumination intensity in each step is set to the objective illumination intensity by adjusting the distance from the optical lamp to the ultraviolet-curable pressure-sensitive adhesive composition or the voltage.

In the production method of the pressure-sensitive adhesive sheet of the present invention, after coating the above-described specific monomer composition on one surface of a substrate, the monomer composition is polymerized by photopolymerization to form a pressure-sensitive adhesive layer.

By virtue of using photopolymerization, a pressure-sensitive adhesive layer composed of a high molecular weight form can be easily formed by controlling the irradiation intensity of light used, the irradiation time or the like. At the same time, since the gel fraction is saturated in the initial stage, a curing time for crosslinking is not required and an environmental load substance such as organic solvent is substantially not contained.

Fig. 1(c) shows an ultraviolet-curable pressure-sensitive adhesive sheet in which an ultraviolet-curable pressure-sensitive adhesive layer 3 is laminated on one surface of a substrate 2.

Another Example

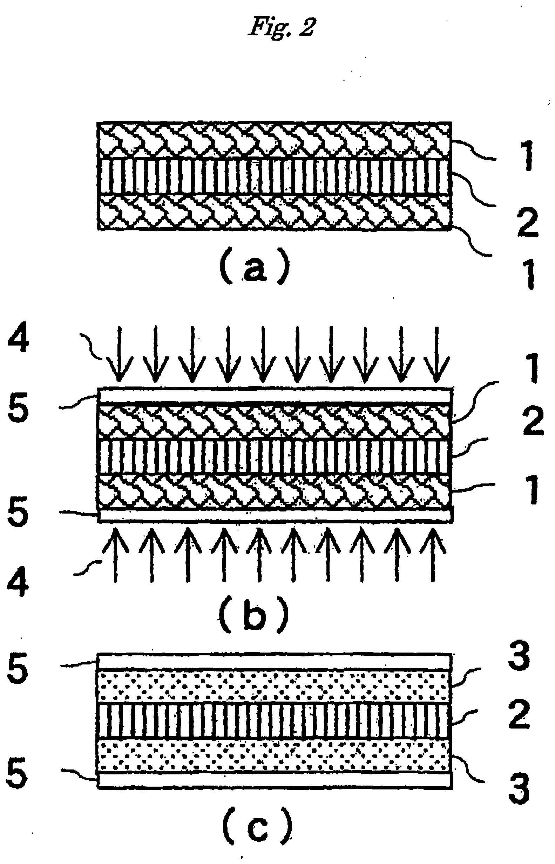

Fig. 2 shows another example of the production method of an ultraviolet-curable pressure-sensitive adhesive sheet of the present invention. In Fig. 2(a), an ultraviolet-curable pressure-sensitive adhesive composition 1 is coated on both surfaces of a substrate 2. Fig. 2(b) shows an ultraviolet irradiation step, namely, a step of irradiating the ultraviolet-curable pressure-sensitive adhesive composition 1 on both surfaces of the substrate 2 with an ultraviolet ray 4 through a release film 5 to obtain an ultraviolet-curable pressure-sensitive adhesive composition layer 3. Fig. 2(c) shows an ultraviolet-curable pressure-sensitive adhesive sheet in which a pressure-sensitive adhesive layer 3 is laminated on both surfaces of a substrate 2.

Another Example

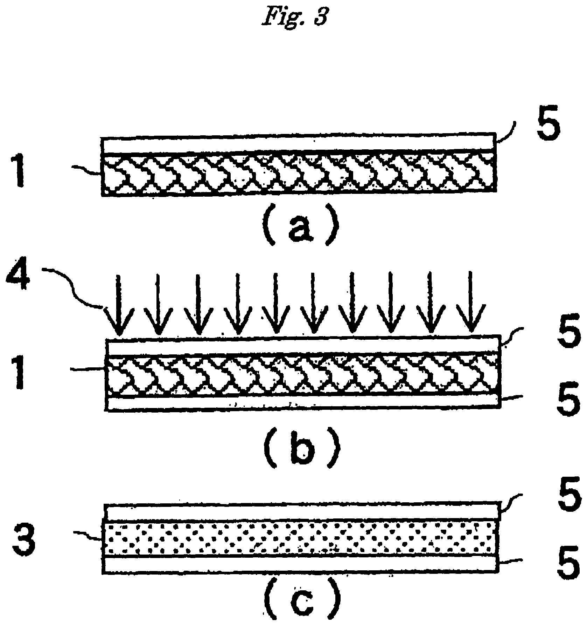

Fig. 3 shows another example of the production method of an ultraviolet-curable pressure-sensitive adhesive sheet of the present invention. In Fig. 3(a), an ultraviolet-curable pressure-sensitive adhesive composition 1 is coated on a release film 5. Fig. 3(b) shows an ultraviolet irradiation step, namely, a step of irradiating the ultraviolet-curable pressure-sensitive adhesive composition 1 with an ultraviolet ray 4 though the release film 5 to obtain an ultraviolet-curable pressure-sensitive adhesive composition layer 3. Fig. 3(c) shows the obtained ultraviolet-curable pressure-sensitive adhesive sheet.

The ultraviolet-curable pressure-sensitive adhesive sheet obtained by the present invention uses an ultraviolet-curable pressure-sensitive adhesive sheet having laminated therein an ultraviolet-curable pressure-sensitive adhesive composition layer containing at least one polyfunctional (meth)acrylate having four or more (meth)acryloyl groups within one molecule and is excellent in the shear strength and adhesive strength under high-temperature conditions.

EXAMPLES

The present invention is described in greater detail below by referring to non-limitative Examples.

Example 1

A solution obtained by adding 0.05 parts by weight of 2,2-dimethoxy-1,2-diphenylethan-1-one ("IRGACURE 651", trade name, produced by Ciba Japan K.K.) and 0.05 parts by weight of 1-hydroxy-cyclohexyl-phenyl-ketone ("IRGACURE 184", trade name, produced by Ciba Japan K.K.) in a mixed monomer solution containing 90 parts by weight of 2-ethylhexyl acrylate (hereinafter, simply referred to as "2EHA") and 10 parts by weight of an acrylic acid (hereinafter, simply referred to as "AA") as the polar group-containing vinyl monomer was charged into a four-neck flask and then exposed to an ultraviolet ray in a nitrogen atmosphere to partially effect photopolymerization (conversion: 7.0%), whereby a partial polymerization product containing a prepolymer having Mw (weight average molecular weight) of 5,000,000 was obtained.

In 100 parts by weight of this partially polymerized syrup, 0.09 parts by weight (0.041 parts by mol based on 100 parts by mol of the monomer component) of tetramethylolmethane tetraacrylate having four acryloyl groups within one molecule ("NK Ester A-TMMT" (acryl equivalent: 88), trade name, produced by Shin-Nakamura Chemical Co., Ltd. (in the Table, simply "A-TMMT")) and 0.04 parts by weight of 2,2-dimethoxy-1,2-diphenylethan-1-one ("IRGACURE 651", trade name, produced by Ciba Japan K.K.) were uniformly mixed, and the mixture was subjected to a defoaming treatment to prepare an ultraviolet-curable pressure-sensitive adhesive composition.

The ultraviolet-curable pressure-sensitive adhesive composition was then coated on the release-treated surface of a 38 μm-thick polyester film with one surface being release-treated by a silicone-based release treating agent, to have a thickness of 800 μm after light irradiation, and further thereon, the release-treated surface of a 38 μm-thick polyethylene terephthalate film with one surface being release-treated by a silicone-based release treating agent was applied.

This sheet was irradiated with an ultraviolet ray by using black light (15 W/cm) at a light illumination intensity of 5 mW/cm$^2$ (measured by Topcon UVR-TI having a maximum peak sensitivity at a wavelength of 350 nm) for a time period necessary to reach a conversion of 99%, whereby an objective pressure-sensitive adhesive sheet was obtained.

Example 2

A pressure-sensitive adhesive sheet was obtained in the same manner as in Example 1 except that in Example 1, 0.10 parts by weight (0.028 parts by mol based on 100 parts by mol of the monomer component) of dipentaerythritol hexaacrylate having six acryloyl groups within one molecule ("KAYARAD DPHA" (acryl equivalent: 97), trade name, produced by Nippon Kayaku Co., Ltd. (in the Table, simply "DPHA")) was used in place of tetramethylolmethane tetraacrylate.

Example 3

A pressure-sensitive adhesive sheet was obtained in the same manner as in Example 1 except that in Example 1, 0.10 parts by weight (0.024 parts by mol based on 100 parts by mol of the monomer component) of a reaction product of a mixture of dipentaerythritol pentaacrylate and dipentaerythritol hexaacrylate, the mixture containing 47 mol% of dipentaerythritol pentaacrylate, with hexamethylene diisocyanate (a mixture of one having six acryloyl groups within one molecule and one having 10 acryloyl groups) ("KAYARAD DPHA-40H" (acryl equivalent: 97 (hexafunctional), 120 (decafunctional)), trade name, produced by Nippon Kayaku Co., Ltd.) (in the Table, simply "DPHA-40H")) was used in place of tetramethylolmethane tetraacrylate.

Comparative Example 1

A pressure-sensitive adhesive sheet was obtained in the same manner as in Example 1 except that in Example 1, 0.12 parts by weight (0.085 parts by mol based on 100 parts by mol of the monomer component) of 1,6-hexanediol acrylate having two acryloyl groups within one molecule ("NK ESTER A-HD" (acryl equivalent: 113), trade name, produced by Shin-Nakamura Chemical Co., Ltd. (in the Table, simply "A- . HD")) was used in place of tetramethylolmethane tetraacrylate.

Comparative Example 2

A pressure-sensitive adhesive sheet was obtained in the same manner as in Example 1 except that in Comparative Example 1, the amount of 1,6-hexanediol acrylate added was changed to 0.10 parts by weight (0.078 parts by mol based on 100 parts by mol of the monomer component).

Comparative Example 3

A pressure-sensitive adhesive sheet was obtained in the same manner as in Example 1 except that in Comparative Example 2, the amount of 1,6-hexanediol acrylate added was changed to 0.06 parts by weight (0.042 parts by mol based on 100 parts by mol of the monomer component).

Comparative Example 4

A pressure-sensitive adhesive sheet was obtained in the same manner as in Example 1 except that in Example 1, 0.10 parts by weight (0.054 parts by mol based on 100 parts by mol of the monomer component) of trimethylolpropane triacrylate having three acryloyl groups within one molecule ("V#295" (acryl equivalent: 99), trade name, produced by Osaka Organic Chemical Industry Ltd. (in the Table, simply "V#295")) was used in place of tetramethylolmethane tetraacrylate.

Comparative Example 5

A pressure-sensitive adhesive sheet was obtained in the same manner as in Example 1 except that in Example 1, 0.33 parts by weight (0.031 parts by mol based on 100 parts by mol of the monomer component) of caprolactone-modified dipentaerythritol hexaacrylate having six acryloyl groups within one molecule ("KAYARAD DCPA-120" (acryl equivalent: 324), trade name, produced by Nippon Kayaku Co., Ltd. (in the Table, simply "DCPA-120")) was used in place of tetramethylolmethane tetraacrylate.

Comparative Example 6

A pressure-sensitive adhesive sheet was obtained in the same manner as in Example 1 except that in Example 2, the amount of dipentaerythritol hexaacrylate added was changed to 0.03 parts by weight (0.008 parts by mol based on 100 parts by mol of the monomer component).

Comparative Example 7

A pressure-sensitive adhesive sheet was obtained in the same manner as in Example 1 except that in Example 2, the amount of dipentaerythritol hexaacrylate added was changed to 0.40 parts by weight (0.11 parts by mol based on 100 parts by mol of the monomer component).
Examples and Comparative Examples of the pressure-sensitive adhesive composition containing (d) microparticles, (e) cells and (f) a surfactant are described below.

Example 4

A solution obtained by adding 0.05 parts by weight of 2,2-dimethoxy-1,2-diphenylethan-1-one ("IRGACURE 651", trade name, produced by Ciba Japan K.K.) and 0.05 parts by weight of 1-hydroxy-cyclohexyl-phenyl-ketone ("IRGACURE 184", trade name, produced by Ciba Japan K.K.) in a mixed monomer solution containing 90 parts by weight of 2-ethylhexyl acrylate (hereinafter, simply referred to as "2EHA") and 10 parts by weight of an acrylic acid (hereinafter, simply referred to as "AA") as the polar group-containing vinyl monomer was charged into a four-neck flask and then exposed to an ultraviolet ray in a nitrogen atmosphere to partially effect photopolymerization (conversion: 7.0%), whereby a syrup containing a prepolymer having Mw (weight average molecular weight) of 5,000,000 was obtained.
In 100 parts by weight of this partially polymerized syrup, 0.09 parts by weight (0.041 parts by mol based on 100 parts by mol of the monomer component) of tetramethylolmethane tetraacrylate having four acryloyl groups within one molecule ("NK Ester A-TMMT" (acryl equivalent: 88), trade name, produced by Shin-Nakamura Chemical Co., Ltd. (in the Table, simply "A-TMMT")), 0.04 parts by weight of 2,2-dimethoxy-1,2-diphenylethan-1-one ("IRGACURE 651", trade name, produced by Ciba Japan K.K.), and 9 parts by weight of glass balloon having an average particle diameter of 45 $\mu$m ("CEL-STAR Z27", trade name, produced by Asahi Glass Company, Ltd., specific gravity: 0.27) were uniformly mixed, and the mixture was subjected to a defoaming treatment. After the deforming treatment, 0.3 parts by weight of a surfactant ("Surflon S-393", trade name, produced by Seimi Chemical Co., Ltd.) was further added, and the system was stirred and mixed to such an extent as not entraining cells to prepare an ultraviolet-curable pressure-sensitive adhesive composition.
Nitrogen cells were uniformly mixed in the adhesive composition prepared above, and the adhesive composition was coated on a 38 $\mu$m-thick polyester film with one surface being release-treated by a silicone-based release treating agent, to have a thickness of 1,200 $\mu$m after light irradiation, and further thereon, a 38 $\mu$m-thick polyethylene terephthalate film with one surface being release-treated by a silicone-based release treating agent was applied.
This sheet was irradiated with an ultraviolet ray by using black light (15 W/cm) at a light illumination intensity of 5 mW/cm$^2$ (measured by Topcon UVR-T1 having a maximum peak sensitivity at a wavelength of 350 nm) for a time period necessary to reach a conversion of 99%, whereby an objective pressure-sensitive adhesive sheet was obtained.

Example 5

A pressure-sensitive adhesive sheet was obtained in the same manner as in Example 3 except that in Example 4, 0.10 parts by weight (0.028 parts by mol based on 100 parts by mol of the monomer component) of dipentaerythritol hexaacrylate having six acryloyl groups within one molecule ("KAYARAD DPHA" (acryl equivalent: 97), trade name, produced by Nippon Kayaku Co., Ltd. (in the Table, simply "DPHA")) was used in place of tetramethylolmethane tetraacrylate and the adhesive composition was coated on a 38 $\mu$m-thick polyester film with one surface being release-treated by a silicone-based release treating agent, so as to have a thickness of 800 $\mu$m after light irradiation.

Example 6

A pressure-sensitive adhesive sheet was obtained in the same manner as in Example 5 except that in Example 5, the adhesive composition was coated on a 38 $\mu$m-thick polyester film with one surface being release-treated by a silicone-based release treating agent, so as to have a thickness of 1,200 $\mu$m after light irradiation.

Comparative Example 8

A pressure-sensitive adhesive sheet was obtained in the same manner as in Example 4 except that in Example 4, 0.12 parts by weight (0.085 parts by mol based on 100 parts by mol of the monomer component) of 1,6-hexanediol acrylate having two acryloyl groups within one molecule ("NK ESTER A-HD" (acryl equivalent: 113), trade name, produced by Shin-Nakamura Chemical Co., Ltd. (in the Table, simply "A-HD")) was used in place of tetramethylolmethane tetraacrylate.

Comparative Example 9

A pressure-sensitive adhesive sheet was obtained in the same manner except that in Comparative Example 8, the amount of 1,6-hexanediol acrylate having two acryloyl groups within one molecule ("NK ESTER A-HD" (acryl equivalent: 113), trade name, produced by Shin-Nakamura Chemical Co., Ltd. (in the Table, simply "A-HD")) was changed to 0.10 parts by weight (0.078 parts by mol based on 100 parts by mol of the monomer component).

Comparative Example 10

A pressure-sensitive adhesive sheet was obtained in the same manner as in Example 4 except that in Example 4, 0.1 parts by weight (0.054 parts by mol based on 100 parts by mol of the monomer component) of trimethylolpropane triacrylate having three acryloyl groups within one molecule ("V#295" (acryl equivalent: 99), trade name, produced by Osaka Organic Chemical Industry Ltd. (in the Table, simply "V#295")) was used in place of tetramethylolmethane tetraacrylate.

Test and Evaluation

Molecular Weight

The Mw (weight average molecular weight) of the prepolymer was determined by GPC (gel permeation chromatography), where apparatus: "HLC-8020", trade name, manufactured by Tosoh Corp., column: "TSKgelGMHHR-H(20)", trade name, produced by Tosoh Corp., solvent: tetrahydrofuran, and standard substance: polystyrene, were used.

180° Peel Adhesive Strength

A 0.4 mm-thick SUS304 steel plate with surface BA (after cold rolling, subjected to a bright annealing treatment) (hereinafter referred to as a BA plate), that was cut into a width of 40 mm and a length of 100 mm and cleaned according to JIS Z 1541-7.2.1.3b), was used as the adherend.
Of the release films on both surfaces of the pressure-sensitive adhesive layer, one release film was separated and after adhering thereto a 50 $\mu$m-thick polyester film, the stack was cut into 25 mm $\times$ 100 mm to prepare a test specimen. Subsequently, the release film on the opposite surface side was separated, and the BA plate was lightly laminated thereto and then press-bonded by one-way pressing of a roller of 5 kg from above the test specimen at a speed of about 300 mm/min.
After the press-bonding, the laminate was left standing at room temperature for 24 hours, the end part of the test specimen was folded at 180° and about 10 mm long separated, the BA plate and the end part of the test specimen were clamped by the lower chuck and the upper chuck, respectively, the end part of the folded test specimen was continuously peeled off at a speed of 50±5 mm/min in an atmosphere of 23°C and 65% RH with care to keep the state in parallel to the tape-laminated surface, and the average of forces was read.

Shear Adhesive strength

A BA sheet was used as the adherend. After cleaning the end part of a BA plate, a release liner on one surface of the pressure-sensitive adhesive sheet cut into a size of 25 mm × 25 mm was separated, the end part of the BA plate was lightly laminated to the surface and press-bonded by one-way pressing of a roller of 5 kg from above the test specimen at a speed of about 300 mm/min, a release liner on the opposite surface was separated, and a cleaned BA plate was similarly laminated thereto. The test specimen was laminated at a position allowing the centerline of the test specimen to coincide with the centerline of the BA plate as much as possible.

As for the normal shear adhesive strength, the laminate after press-bonding was left standing at room temperature for 24 hours, the chuck-to-chuck distance of a tensile tester was adjusted to be from 100 to 150 mm, the BA plate was set on the tensile tester such that the centerline of the BA plate and the centerline of the grip were on one straight line and the force imposed on the BA plate was added in parallel to the center line of the BA plate, and thereafter, by pulling the test specimen at a speed of 50±5 mm/min in an atmosphere of 23°C and 65% RH, the maximum load until the BA body was broken was measured.

As for the high-temperature shear adhesive strength, the laminate was left standing at room temperature for 24 hours and further left standing in an atmosphere of 80°C for 30 minutes and thereafter, by pulling the test specimen at a speed of 50±5 mm/min in an atmosphere of the same temperature, the maximum load until the BA body was broken was measured.

90°C Shear Holding Power

A BA plate was prepared in the same manner as in the above-mentioned "Shear Adhesive Strength" except that a hole was punched in the center at one end part of the BA plate used in "Shear Adhesive Strength".

The laminate after press-bonding was left standing at room temperature for 24 hours and further left standing in a hot-air circulating constant temperature apparatus at 90°C±2°C for 1 hour and thereafter, by hanging a weight with a mass of 2 kg±0.01 kg at the same temperature, the time until dropping was measured.

Table 1

| | | Polyfunctional Acrylate | | | 180° Peel Adhesive Strength [N/25 mm] | Shear Adhesive Strength (N/cm$^2$) | | 90°C Shear Holding Power [hr] |
|---|---|---|---|---|---|---|---|---|
| | Kind | Number of (Meth) acryloyl Groups | Acryl Equivalent | Amount Added (parts by mol) | | Normal | High-Temperature | |
| Example 1 | A-TMMT | 4 | 88 | 0.041 | 50 | *80* | *35* | 70 |
| Example 2 | DPHA | 6 | 97 | 0.028 | 48 | 97 | *40* | >100 |
| Example 3 | DPHA-4OH | 6.10 | 97.120 | 0.024 | 48 | 79 | *35* | 75 |
| Comparative Example 1 | A-HD | 2 | 113 | 0.085 | 46 | *75* | *26* | 10 |
| Comparative Example 2 | A-HD | 2 | 113 | 0.078 | 48 | *74* | *25* | 20 |
| Comparative Example 3 | A-HD | 2 | 113 | 0.042 | 50 | *70* | 15 | 20 |
| Comparative Example 4 | V#295 | 3 | 99 | 0.054 | 48 | *75* | *31* | 48 |
| Comparative Example 5 | DPCA-120 | 6 | 324 | 0.031 | 30 | 75 | *30* | 45 |
| Comparative Example 6 | DHPA | 6 | 97 | 0.008 | *50* | *50* | 15 | 10 |
| Comparative Example 7 | DPHA | 6 | 97 | 0.110 | 15 | 90 | *50* | 30 |

*Italics: Cohesive failure (cohesive failure indicates a state where the pressure-sensitive adhesive partially remained on the BA plate due to occurrence of breaking inside of the pressure-sensitive adhesive).

It is revealed that in Examples 1 to 3 using a polyfunctional (meth)acrylate having a number of functional groups of 4 or more, both the shear adhesive strength and the 90°C shear holding power are high as compared with Comparative Examples 1 to 4 using a polyfunctional (meth)acrylate having a number of functional groups of less than 4. Even if the number of functional groups is 4 or more, in Comparative Example 5 using a polyfunctional (meth)acrylate having an acryl equivalent of more than 150, the shear adhesive strength and the 90°C shear holding power are lowered. Also, in Comparative Example 6 using a polyfunctional (meth)acrylate having a number of functional groups of 4 or more, in which the amount of the polyfunctional (meth)acrylate is less than 0.01 parts by mol, the shear adhesive strength and the 90°C shear holding power are lowered. Additionally, in Comparative Example 7 in which the amount of the polyfunctional (meth)acrylate exceeds 0.1 parts by mol, the 180° peel adhesive strength and the 90°C shear holding power are lowered. These reveal that when at least one polyfunctional (meth)acrylate having four or more (meth)acryloyl groups within one molecule and having an acryl equivalent of 150 or less, which is the component (b), is added in an amount of 0.01 to 0.1 parts by mol, a pressure-sensitive adhesive sheet having a pressure-sensitive adhesive layer excellent in the shear strength and adhesive strength under high-temperature conditions can be obtained.

Table 2

| | Thickness | Polyfunctional Acrylate | | | | 180° Peel Adhesive Strength [N/25 mm] | Shear Adhesive Strength [N/cm$^2$] | 90°C Shear Holding Power [hr] | |
| --- | --- | --- | --- | --- | --- | --- | --- | --- | --- |
| | | Kind | Number of (meth) acryloyl Groups | Acryl Equivalent | Added Amount (parts by mol) | | Normal | | |
| Example 4 | 1.2 mm | A-TMMT | 4 | 88 | 0.041 | 50 | 80 | 40 | |
| Example 5 | 0.8 mm | DPHA | 6 | 97 | 0.028 | 60 | *100* | >100 | |
| Example 6 | 1.2 mm | DPHA | 6 | 97 | 0.028 | 55 | *100* | 100 | |
| Comparative Example 8 | 1.2 mm | A-HD | 2 | 113 | 0.085 | 45 | 65 | 9 | |
| Comparative Example 9 | 1.2 mm | A-HD | 2 | 113 | 0.078 | 48 | *60* | 5 | |
| Comparative Example 10 | 1.2 mm | V#295 | 3 | 99 | 0.054 | 45 | 65 | 12 | |
| *Italics: Cohesive failure (cohesive failure indicates a state where the pressure-sensitive adhesive partially remained on the BA plate due to occurrence of breaking inside of the pressure-sensitive adhesive). | | | | | | | | | |

As regards the foam-shaped ultraviolet-curable pressure-sensitive adhesive sheet containing microparticles, a surfactant and cells, it is revealed that in Examples 4, 5 and 6 using a polyfunctional (meth)acrylate having a number of functional groups of 4 or more, both the shear adhesive strength and the 90°C shear holding power are high as compared with Comparative Examples 8, 9 and 10 using a polyfunctional (meth)acrylate having a number of functional groups of less than 4. This reveals that in addition to adding (b) 0.01 to 0.1 parts by mol of at least one polyfunctional (meth)acrylate having four or more (meth)acryloyl groups within one molecule, when the foam-shaped ultraviolet-curable pressure-sensitive adhesive sheet further contains (d) a hollow microsphere having an average particle diameter of 1 to 500 $\mu$m, (e) cells, and (f) a surfactant having a structure of -CH$_2$-CH$_2$-O- or -CH$_2$-CH(CH$_3$)-O-, an ultraviolet-curable pressure-sensitive adhesive sheet high in both the shear adhesive strength and the 90°C shear holding power is also obtained.

While the present invention has been described in detail and with reference to specific embodiments thereof, it will be apparent to one skilled in the art that various changes and modifications can be made therein without departing from the spirit and scope of the invention.

This application is based on Japanese Patent Application (Patent Application No. 2006-239109) filed on September 4, 2006 and Japanese Patent Application (Patent Application No. 2007-203706) filed on August 4, 2007, which are incorporated herein by reference in their entirety.

Also, all references cited are incorporated herein by reference in their entirety.

INDUSTRIAL APPLICABILITY

According to the pressure-sensitive adhesive sheet of the present invention, a pressure-sensitive adhesive sheet having pressure-sensitive adhesive layer excellent in the shear strength and adhesive strength under high-temperature conditions can be formed.

**Claims**

1.    An ultraviolet-curable pressure-sensitive adhesive composition comprising:

       (a) a monomer component containing 70 to 99 wt% of an alkyl (meth)acrylate with the carbon number in the alkyl group being 1 to 20 and 1 to 30 wt% of a polar group-containing vinyl monomer;
       (b) at least one polyfunctional (meth)acrylate having four or more (meth)acryloyl groups within one molecule and having an acryl equivalent of 150 or less, in an amount of 0.01 to 0.1 parts by mol based on 100 parts by mol of the monomer component; and
       (c) a photopolymerization initiator.

2.    The ultraviolet-curable pressure-sensitive adhesive composition according to claim 1, which further comprises (d) microparticles in an amount of 0.5 to 20 parts by weight based on 100 parts by weight of the ultraviolet-curable pressure-sensitive adhesive composition.

3.    The ultraviolet-curable pressure-sensitive adhesive composition according to claim 2, wherein the microparticles (d) are hollow microspheres having an average particle diameter of 1 to 500 $\mu$m.

4.    The ultraviolet-curable pressure-sensitive adhesive composition according to any one of claims 1 to 3, which further comprises at least one of (e) cells and (f) a surfactant having a structure of -CH$_2$-CH$_2$-O- or -CH$_2$-CH(CH$_3$)-O- within the molecule thereof.

5.    The ultraviolet-curable pressure-sensitive adhesive composition according to claim 4, wherein the surfactant (f) is a fluorine-containing surfactant.

6.    An ultraviolet-curable pressure-sensitive adhesive sheet comprising an ultraviolet-curable pressure-sensitive adhesive composition layer obtained by irradiating the ultraviolet-curable pressure-sensitive adhesive composition according to any one of claims 1 to 5 with an ultraviolet ray.

7.    An ultraviolet-curable pressure-sensitive adhesive sheet comprising a substrate and an ultraviolet-curable pressure-sensitive adhesive composition layer provided on at least one surface of the substrate, the ultraviolet-curable pressure-sensitive adhesive composition layer being obtained by irradiating the ultraviolet-curable pressure-sensitive adhesive composition according to any one of claims 1 to 5 with an ultraviolet ray.

8. A process for producing an ultraviolet-curable pressure-sensitive adhesive sheet, said process comprising:

coating an ultraviolet-curable pressure-sensitive adhesive composition on at least one surface of a substrate, wherein the ultraviolet-curable pressure-sensitive adhesive composition comprises (a) a monomer component containing 70 to 99 wt% of an alkyl (meth)acrylate with the carbon number in the alkyl group being 1 to 20 and 1 to 30 wt% of a polar group-containing vinyl monomer, (b) at least one polyfunctional (meth)acrylate having four or more (meth)acryloyl groups within one molecule and having an acryl equivalent of 150 or less, in an amount of 0.01 to 0.1 parts by mol based on 100 parts by mol of the monomer component, and (c) a photopolymerization initiator;
subsequently irradiating an ultraviolet ray thereon to form a pressure-sensitive adhesive layer.

9. The process for producing an ultraviolet-curable pressure-sensitive adhesive sheet according to claim 8, wherein the pressure-sensitive adhesive layer is formed by irradiating an ultraviolet ray with the intensity of 1 to 50 mW/cm$^2$ at a wavelength of 300 to 400 nm.

**Patentansprüche**

1. Ultraviolett-härtbare Haftklebstoffzusammensetzung umfassend:

(a) eine Monomerkomponente, die 70 bis 99 Gew.-% eines Alkyl(meth)acrylats, bei dem die Kohlenstoffzahl in der Alkylgruppe 1 bis 20 beträgt, und 1 bis 30 Gew.-% eines eine polare Gruppe enthaltenden Vinylmonomers enthält;
(b) wenigstens ein polyfunktionelles (Meth)acrylat mit vier oder mehr (Meth)acryloylgruppen in einem Molekül und mit einem Acryläquivalent von 150 oder weniger, in einer Menge von 0,01 bis 0,1 Mol-Teilen bezogen auf 100 Mol-Teile der Monomerkomponente; und
(c) einen Photopolymerisationsinitiator.

2. Ultraviolett-härtbare Haftklebstoffzusammensetzung gemäß Anspruch 1, welche außerdem

(d) Mikropartikel in einer Menge von 0,5 bis 20 Gew.-Teilen, bezogen auf 100 Gew.-Teile der Ultraviolett-härtbaren Haftklebstoffzusammensetzung, umfasst.

3. Ultraviolett-härtbare Haftklebstoffzusammensetzung gemäß Anspruch 2, wobei die Mikropartikel (d) hohle Mikrokugeln mit einem mittleren Partikeldurchmesser von 1 bis 500 $\mu$m sind.

4. Ultraviolett-härtbare Haftklebstoffzusammensetzung gemäß einem der Ansprüche 1 bis 3, welche außerdem wenigstens eines von (e) Zellen und (f) einem oberflächenaktiven Stoff mit einer Struktur von -CH$_2$-CH$_2$-O- oder -CH$_2$-CH(CH$_3$)-O- in seinem Molekül umfasst.

5. Ultraviolett-härtbare Haftklebstoffzusammensetzung gemäß Anspruch 4, wobei der oberflächenaktive Stoff (f) ein fluorhaltiger oberflächenaktiver Stoff ist.

6. Ultraviolett-härtbare Haftklebefolie umfassend eine Ultraviolett-härtbare Haftklebstoffzusammensetzungsschicht, die durch Bestrahlen der Ultraviolett-härtbaren Haftklebstoffzusammensetzung gemäß einem der Ansprüche 1 bis 5 mit einem Ultraviolettstrahl erhalten wird.

7. Ultraviolett-härtbare Haftklebefolie umfassend ein Substrat und eine Ultraviolett-härtbare Haftklebstoffzusammensetzungsschicht, die auf wenigstens einer Oberfläche des Substrats bereitgestellt ist, wobei die Ultraviolett-härtbare Haftklebstoffzusammensetzungsschicht durch Bestrahlen der Ultraviolett-härtbaren Haftklebstoffzusammensetzung gemäß einem der Ansprüche 1 bis 5 mit einem Ultraviolettstrahl erhalten wird.

8. Verfahren zum Herstellen einer Ultraviolett-härtbaren Haftklebefolie, wobei das Verfahren umfasst:

Auftragen einer Ultraviolett-härtbaren Haftklebstoffzusammensetzung auf wenigstens eine Oberfläche eines Substrats, wobei die Ultraviolett-härtbare Haftklebstoffzusammensetzung (a) eine Monomerkomponente, die 70 bis 99 Gew.-% eines Alkyl(meth)acrylats, bei dem die Kohlenstoffzahl in der Alkylgruppe 1 bis 20 beträgt, und 1 bis 30 Gew.-% eines eine polare Gruppe enthaltenden Vinylmonomers enthält, (b) wenigstens ein polyfunktionelles (Meth)acrylat mit vier oder mehr (Meth)acryloylgruppen in einem Molekül und mit einem Acryläquivalent von 150 oder weniger, in einer Menge von 0,01 bis 0,1 Mol-Teilen, bezogen auf 100 Mol-Teile der Monomerkomponente, und (c) einen Photopolymerisationsinitiator umfasst;
anschließend Bestrahlen derselben mit einem Ultraviolettstrahl, um eine Haftklebstoffschicht zu bilden.

9. Verfahren zum Herstellen einer Ultraviolett-härtbaren Haftklebefolie gemäß Anspruch 8, wobei die Haftklebstoffschicht durch Bestrahlen mit einem Ultraviolettstrahl mit der Intensität von 1 bis 50 mW/cm$^2$ bei einer Wellenlänge von 300 bis 400 nm gebildet wird.

**Revendications**

1. Composition adhésive sensible à la pression durcissable par rayonnement ultraviolet, comprenant :

   (a) un composant monomère contenant de 70 à 99 % en poids d'un (méth)acrylate d'alkyle avec un nombre de carbones dans le groupe alkyle qui est de 1 à 20 et de 1 à 30 % en poids d'un monomère de vinyle contenant un groupe polaire ;
   (b) au moins un (méth)acrylate polyfonctionnel ayant quatre groupes (méth)acryloyle ou plus au sein d'une molécule et ayant un équivalent acryle de 150 ou moins, dans une quantité de 0,01 à 0,1 partie en mole par rapport à 100 parties en mole du composant monomère ; et
   (c) un initiateur de photopolymérisation.

2. Composition adhésive sensible à la pression durcissable par rayonnement ultraviolet selon la revendication 1, qui comprend en outre (d) des microparticules dans une quantité de 0,5 à 20 parties en poids par rapport à 100 parties en poids de la composition adhésive sensible à la pression durcissable par rayonnement ultraviolet.

3. Composition adhésive sensible à la pression durcissable par rayonnement ultraviolet selon la revendication 2, dans laquelle les microparticules (d) sont des microsphères creuses ayant un diamètre moyen de particule de 1 à 500 $\mu$m.

4. Composition adhésive sensible à la pression durcissable par rayonnement ultraviolet selon l'une quelconque des revendications 1 à 3, qui comprend en outre au moins l'un parmi (e) des cellules et (f) un tensioactif ayant une structure de -CH$_2$-CH$_2$-O- ou -CH$_2$-CH(CH$_3$)-O- au sein de sa molécule.

5. Composition adhésive sensible à la pression durcissable par rayonnement ultraviolet selon la revendication 4, dans laquelle le tensioactif (f) est un tensioactif contenant du fluor.

6. Feuille adhésive sensible à la pression durcissable par rayonnement ultraviolet comprenant une couche de composition adhésive sensible à la pression durcissable par rayonnement ultraviolet obtenue par irradiation de la composition adhésive sensible à la pression durcissable par rayonnement ultraviolet selon l'une quelconque des revendications 1 à 5 avec un rayon ultraviolet.

7. Feuille adhésive sensible à la pression durcissable par rayonnement ultraviolet comprenant un substrat et une couche de composition adhésive sensible à la pression durcissable par rayonnement ultraviolet disposée sur au moins une surface du substrat, la couche de composition adhésive sensible à la pression durcissable par rayonnement ultraviolet étant obtenue par irradiation de la composition adhésive sensible à la pression durcissable par rayonnement ultraviolet selon l'une quelconque des revendications 1 à 5 avec un rayon ultraviolet.

8. Procédé de production d'une feuille adhésive sensible à la pression durcissable par rayonnement ultraviolet, ledit procédé comprenant :

   le revêtement par une composition adhésive sensible à la pression durcissable par rayonnement ultraviolet sur au moins une surface d'un substrat, dans lequel la composition adhésive sensible à la pression durcissable par rayonnement ultraviolet comprend (a) un composant monomère contenant de 70 à 99 % en poids d'un (méth)acrylate d'alkyle avec un nombre de carbones dans le groupe alkyle qui est de 1 à 20 et de 1 à 30 % en poids d'un monomère de vinyle contenant un groupe polaire, (b) au moins un (méth)acrylate polyfonctionnel ayant quatre groupes (méth)acryloyle ou plus au sein d'une molécule et ayant un équivalent acryle de 150 ou moins, dans une quantité de 0,01 à 0,1 partie en mole par rapport à 100 parties en mole du composant monomère, et (c) un initiateur de photopolymérisation ;

puis irradiation par un rayon ultraviolet dessus pour former une couche adhésive sensible à la pression.

9. Procédé de production d'une feuille adhésive sensible à la pression durcissable par rayonnement ultraviolet selon la revendication 8, dans lequel la couche adhésive sensible à la pression est formée par irradiation d'un rayon ultraviolet avec une intensité de 1 à 50 mW/cm$^2$ à une longueur d'onde de 300 à 400 nm.

*Fig. 1*

1

2

(a)

4

5

1

2

(b)

5

3

2

(c)

*Fig. 2*

(a)

(b)

(c)

*Fig. 3*

1
5
(a)

4
1
5
5
5
(b)

3
5
5
(c)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9286958 A
- JP 57017030 B
- JP 8120230 A
- JP 8109356 A
- JP 7048549 A
- JP 1217092 A
- JP 2248483 A
- JP 63089582 A
- JP 2006022189 A
- JP 7278500 A
- JP 2003013015 A
- JP 2006239109 A
- JP 2007203706 A